(19) Europäisches Patentamt
European Patent Office
Office européen des brevets

(11) EP 4 772 272 A1

(12) **EUROPEAN PATENT APPLICATION**

(43) Date of publication:
08.07.2026 Bulletin 2026/28

(21) Application number: 25209384.4

(22) Date of filing: 17.10.2025

(51) International Patent Classification (IPC):
$B01J\ 21/04^{(2006.01)}$   $B01J\ 23/75^{(2006.01)}$
$B01J\ 29/40^{(2006.01)}$   $B01J\ 29/70^{(2006.01)}$
$B01J\ 37/00^{(2006.01)}$   $B01J\ 37/04^{(2006.01)}$
$B01J\ 37/08^{(2006.01)}$   $B01J\ 35/30^{(2024.01)}$
$C10G\ 2/00^{(2006.01)}$

(52) Cooperative Patent Classification (CPC):
B01J 23/75; B01J 35/399; B01J 37/0009;
B01J 37/04; C10G 2/332; B01J 21/04; B01J 29/40;
B01J 29/703; B01J 2235/30

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.11.2024 KR 20240157308

(71) Applicant: SK Innovation Co., Ltd.
Seoul 03188 (KR)

(72) Inventors:
• LEE, Chang Q
34124 Daejeon (KR)
• LEE, Ho Jeong
34124 Daejeon (KR)
• LEE, Seung Woo
34124 Daejeon (KR)
• LIM, Yun Ji
34124 Daejeon (KR)

(74) Representative: Prüfer & Partner mbB
Patentanwälte · Rechtsanwälte
Sohnckestraße 12
81479 München (DE)

(54) **CATALYST FOR FISCHER-TROPSCH REACTION AND METHOD OF PREPARING THE SAME**

(57) A catalyst for a Fischer-Tropsch (FT) reaction, which includes a composite carrier containing uniformly dispersed alumina and zeolite and a metal uniformly supported on the composite carrier. Herein, the metal includes Co. The catalyst leads to improved product selectivity. In addition, a method of preparing said catalyst is described.

**FIG.1**

MAG: 50x   HV: 15kV   WD: 11.6mm   Px: 4.88 µm   500 µm

EP 4 772 272 A1

**Description**

BACKGROUND

Field

The present disclosure relates to a catalyst for Fischer-Tropsch (FT) reaction and a method of preparing the same.

Description of related art

Synthetic fuel (or synfuel) is generally defined as a hydrocarbon produced through a series of chemical reactions from synthesis gas, which is a mixture of carbon monoxide and hydrogen, to synthesize fuel. Synthetic fuel is distinct from hydrocarbons separated by distillation of crude oil. Among catalytic reactions for synthesizing liquid hydrocarbons from synthesis gas, a FT reaction is a representative example.

Jet fuel is fuel used in aircraft engines. Sustainable aviation fuel (SAF) refers to jet fuel made from sustainable and renewable raw materials. The raw materials may be bio-derived raw materials such as seaweed, animals/plants, and cooking oil. Alternatively, the raw materials may be synthetic raw materials prepared by using carbon dioxide and hydrogen derived from air and water, respectively.

SAF can replace conventional jet fuel without modifying conventional aircraft. SAF can reduce carbon emissions by up to 80% compared to conventional jet fuel prepared based on fossil resources such as oil and coal. Thus, SAF is gaining attention not only from the perspective that SAF can address depletion of conventional fossil resources and rising crude oil prices, but also from the perspective that SAF can help mitigate global warming and reduce carbon dioxide emissions.

[Related Art Document]

[Patent Document]

(Patent document 1) Korean Patent Application Publication No. 10-2018-0125087 A

SUMMARY

According to one aspect of the present disclosure, a new catalyst which may be used in a Fischer-Tropsch (FT) reaction may be provided. According to another aspect of the present disclosure, a method of preparing said catalyst may be provided.

The catalyst of the present disclosure may be widely applied in SAF preparation techniques, and thus the catalyst may also contribute to mitigate global warming by reducing carbon emissions.

In one aspect of the present disclosure, a catalyst for an FT reaction may include a composite carrier including uniformly dispersed alumina and zeolite; and a metal supported on the composite carrier, and the metal includes Co.

According to one embodiment, the catalyst may have a composition uniformity of 5.0 or less, as defined by UN in Equation 1 below.

(Equation 1)

$$UN = \frac{\sum\limits_{i=1}^{i=M} \left| C_{Al}(i) - C_{Al}(ave) \right|}{M \times C_{Al}(ave)} \times 100$$

In Equation 1, UN represents the composition uniformity. $C_{Al}$ represents a composition of alumina with a total content (wt%) of alumina and zeolite as a denominator and an alumina content (wt%) as a numerator. $C_{Al}(ave)$ represents an average composition of alumina on a cross-section of a carrier across the center of the composite carrier. $C_{Al}(i)$ represents a composition of alumina at the i-th numbered location when sequential numbers are assigned to locations spaced at regular intervals along a straight reference line crossing the center of the cross-section of the carrier. M represents a total number of the locations, where the composition of alumina is measured on the reference line, and M is a natural number from 20 to 500.

According to one embodiment, the zeolite may have an MRE structure or an MFI structure.

According to one embodiment, the zeolite may include EU-2, ZSM-5, ZSM-48, or a combination thereof.

According to one embodiment, a weight ratio of alumina to zeolite in the composite carrier may be 1:1 to 1:5.

According to one embodiment, a content of the composite carrier in the catalyst may be at least 80 wt% based on the total mass of the catalyst.

According to one embodiment, the metal may further include Fe.

According to one embodiment, a content of the metal in the catalyst may be at least 5 wt% based on the total mass of the catalyst.

According to one embodiment, the catalyst may further include a co-catalyst metal.

According to one embodiment, the co-catalyst metal may include Y, Ce, La, W, Mo, or a combination thereof.

According to one embodiment, a content of the co-catalyst metal in the catalyst may be at least 1 wt% based on the total mass of the catalyst.

According to one embodiment, the catalyst may show a reduction peak at 600 °C or higher, as measured by hydrogen temperature-programmed reduction ($H_2$-TPR).

In another aspect of the present disclosure, provided is a method of preparing a catalyst for a Fischer-Tropsch (FT) reaction. The method may include preparing a composite carrier mixture including alumina hydrate and zeolite; preparing a precursor solution of a Co-containing metal; preparing a catalyst mixture by mixing the composite carrier mixture and the precursor solution; and calcining the catalyst mixture.

According to one embodiment, the preparation of the catalyst mixture may further include adding an acid to the precursor solution.

According to one embodiment, the preparation of the catalyst mixture may include preparing a paste by mixing the composite carrier mixture and the precursor solution; and preparing an extrudate by extruding the paste. The calcination of the catalyst mixture may refer to calcination of the extrudate.

According to one embodiment, use of the catalyst in an FT reaction can increase selectivity of fractions with a boiling point below a diesel boiling point range in FT reaction products. According to another embodiment, use of the catalyst can increase a content of olefin and iso-paraffin in the FT reaction products. According to a further embodiment, an FT process using the catalyst can increase a yield of jet fuel in conjunction with a subsequent fuel oil preparation process.

BRIEF DESCRIPTION OF THE DRAWINGS

Specific embodiments will be described with reference to the appended drawings.

Figure 1 shows an SEM image of a cross-section of a catalyst carrier according to one embodiment;

Figure 2 shows dispersion of each element by EDS analysis in the cross-section of the catalyst carrier according to one embodiment;

Figure 3 shows a line profile of a composition of Al and Si on a straight reference line crossing the center of the catalyst carrier according to one embodiment;

Figure 4 shows $H_2$-TPR analysis results of catalysts of selected Examples and a Comparative Example as a reference; and

Figures 5 and 6 show experimental results from FT reactions in terms of product selectivity of the catalysts of selected Examples and a Comparative Example as a reference.

DESCRIPTION OF THE PREFERRED EMBODIMENTS

Hereinafter, the present disclosure will be described in detail with reference to the attached drawings. However, this is merely illustrative, and the present disclosure is not limited to the specific embodiments described by way of example.

One aspect of the present disclosure provides a catalyst for an FT reaction. An FT reaction product, which is liquid hydrocarbon or synthetic oil (or syncrude), may be used as a starting material for fuel oil production. Among the fuel oils, jet fuel may be obtained by isomerizing a fraction, which consists of synthetic oil, with a boiling point within a kerosene boiling point range; alkylating and/or polymerizing a fraction, which consists of synthetic oil, with a boiling point within a naphtha boiling range; and/or cracking a fraction with a boiling point at or above a diesel boiling range.

In the present disclosure, in relation to synthetic oil, the expressions "naphtha fraction", "kerosene fraction" (also called "SAF fraction"), and "diesel+ fraction" are used. The expression "naphtha fraction" refers to a fraction with a boiling point within a naphtha boiling point range or a fraction with a carbon number within a naphtha carbon number range, and the expressions may be used interchangeably with each other. The same applies to the expressions "kerosene fraction" and "diesel+ fraction". In the present disclosure, the naphtha fraction contains hydrocarbons having 5 to 8 carbon atoms. The kerosene fraction contains hydrocarbons with 9 to 15 carbon atoms. The diesel+ fraction contains hydrocarbons with 16 carbon atoms or more.

Considering the conjunction between an FT process and the above-mentioned jet fuel preparation process, the catalyst of the present disclosure is designed to produce synthetic oil with a composition that may increase production efficiency of jet fuel.

The catalyst includes a composite carrier, and a metal supported on the composite carrier. The composite carrier includes alumina and zeolite. In addition, the metal includes Co.

The alumina and zeolite are uniformly dispersed within the composite carrier. In the present disclosure, the expression "uniformly dispersed" means that alumina and/or zeolite are not concentrated in specific areas within the composite carrier.

In some embodiments of the present disclosure, the uniform dispersion of alumina and zeolite may be defined by UN as stated below in Equation 1.

(Equation 1)

$$UN = \frac{\sum\limits_{i=1}^{i=M} \left| C_{Al}(i) - C_{Al}(ave) \right|}{M \times C_{Al}(ave)} \times 100$$

In Equation 1, UN represents the composition uniformity. $C_{Al}$ represents a composition of alumina with a total content (wt%) of alumina and zeolite as a denominator and an alumina content (wt%) as a numerator. $C_{Al}(ave)$ represents an average composition of alumina on a cross-section of a carrier across the center of the composite carrier. $C_{Al}(i)$ represents a composition of alumina at the i-th numbered location when sequential numbers are assigned to locations spaced at regular intervals along a straight reference line crossing the center of the cross-section of the carrier. M represents a total number of the locations, where the composition of alumina is measured on the reference line, and M is a natural number from 20 to 500.

According to one embodiment, the catalyst may have a UN in a range of 5.0 or less. Specifically, the UN of the catalyst may be 3.3 or less, more specifically 2.5 or less, more specifically 2.3 or less, and even more specifically 2.1 or less. A UN may be greater than 0 and substantially 0.01 or more, yet is not limited thereto.

In Equation 1, one or more of $C_{Al}(i)$ (where i is a natural number from 1 to M) may represent a composition of alumina at a location within the central area of the cross-section of the carrier (hereinafter referred to as the "carrier cross-section"). In addition, one or more of $C_{Al}(i)$ may also represent a composition of alumina at a location within the edge area of the carrier cross-section.

On the basis of a radius (Rr) of the carrier cross-section in a radial direction from the center of the carrier, the central area may refer to an area within 0.01 to 0.20 Rr, specifically within 0.05 to 0.15 Rr, in the radial direction from the center of the carrier cross-section. In this case, the shape of the central area may correspond to the shape of the carrier cross-section. That is, the central area may take a shape in which the shape of the carrier cross-section is diminished by 0.01 to 0.20 Rr, specifically, by 0.05 to 0.15 Rr, on the basis of the length.

Since the carrier is porous, there is a risk of the mounting materials intruding into the edges when the materials are mounted to fix the carrier. There is a risk of performing an inaccurate composition analysis due to the presence of said mounting materials. Ideally, the edge area should be an area free from any contamination by the mounting materials, excluding the edges of the carrier cross-section that are contaminated with the mounting materials. Yet, at the same time, the edge area should be an area as close to the edges of the carrier cross-section as possible to investigate the degree of composition uniformity substantially throughout the entire area of the carrier cross-section. In this context, on the basis of a radius (Rr) of the carrier cross-section in a radial direction from the center of the carrier, the edge area may refer to an area within 0.70 to 0.95 Rr, specifically within 0.75 to 0.85 Rr, in the radial direction from the center of the carrier cross-section.

The regular intervals between the locations (where compositions are analyzed) spaced apart along the reference line may represent a value obtained by dividing a distance between the edge area and the central area by M. According to one embodiment, the regular intervals may be 1 to 20 $\mu$m, more specifically 1 to 10 $\mu$m, and even more specifically 2 to 8 $\mu$m, but are not necessarily limited thereto.

Additionally, although the UN is concerned with the composition uniformity of alumina, the carrier is a composite carrier of alumina and zeolite, and the composition of alumina has the total content (wt%) of alumina and zeolite as the denominator and the alumina content (wt%) as the numerator. Accordingly, the composition uniformity of alumina may correspond to the composition uniformity of the zeolite. Therefore, a low UN value not only means that alumina is uniformly dispersed but can further indicate that the zeolite is also uniformly dispersed.

Experimentally, the composition of alumina ($C_{Al}$) in Equation 1 may be calculated based on results of Energy Dispersive Spectrometry (EDS). Specifically, $C_{Al}$(ave) may be a value calculated through element mapping by targeting the entire area (where it is an area encompassing the above-mentioned edge area and central area, excluding the area contaminated by mounting materials) of the carrier cross-section. $C_{Al}$(i) may be calculated based on measurement results for each of the locations spaced at regular intervals along the reference line in the alumina composition line profile on the cross-section of the carrier. In energy dispersive spectroscopic analysis, a working distance (WD) may be 11.6 mm. An acceleration voltage may be 15 kV. A current may be 0.4 nA. A scan speed can be 0.2 mm/msec. These may be the results of dozens or hundreds of repeated measurements. The measurements may be carried out on an FEI *Apreo S2* SEM (scanning emission microscope) using an *Octane* EDS detector provided by Bruker. The image magnification may be 50 x.

The metal may be uniformly supported on the composite carrier. In the present disclosure, the expression "uniformly supported" means that the metal is not densely supported in a specific area of the composite carrier. Specifically, the metal is not mainly supported on alumina or mainly on zeolite but may be evenly supported on each of alumina and zeolite. In other words, the catalyst of the present disclosure may be a composite catalyst in which a first catalyst having a metal supported on alumina and a second catalyst having a metal supported on zeolite are uniformly dispersed. The composite carrier includes alumina. The first catalyst (where the metal is supported on alumina) promotes conversion of synthesis gas into liquid hydrocarbons (e.g., fractions with a boiling point above the diesel boiling point range) with a relatively large number of carbon atoms in the FT reaction. According to one embodiment, the alumina may be derived from alumina hydrate. The alumina hydrate may include boehmite, pseudo-boehmite, or combinations thereof. As will be described later, the alumina hydrate may be calcined during catalyst preparation and finally converted into alumina. The alumina hydrate also serves as a binder, and it may promote interactions between the metal and the composite carrier, thereby improving the adhesive strength between the metal and the composite carrier, which is particularly relevant during catalyst fabrication. When preparing a catalyst, when alumina is used directly instead of alumina hydrate, a problem may occur when adhesive strength between the converted alumina and the zeolite cannot be maintained due to insufficient binding properties.

The composite carrier also includes one or more zeolite(s). The second catalyst (where the metal is supported on zeolite) may increase a yield of fractions among the FT reaction products with a boiling point below the kerosene boiling point. More specifically, the use of the second catalyst may increase a yield of the naphtha fraction. In addition, the use of a second catalyst may increase selectivity of olefin and/or *iso*-paraffin in synthetic oil.

According to one embodiment, the zeolite has an MRE structure or an MFI structure. Specifically, the zeolite may include EU-2 (disordered ferrierite-type zeolite; MRE framework), ZSM-5 (MFI-type zeolite), ZSM-48 (disordered ferrierite-type zeolite; MRE framework), or a combination thereof. In addition, the zeolite may have a silica-alumina ratio (SAR) of 20 to 200. When the SAR is less than 20, acidity, particularly Brønsted acidity, is too strong. This may result in cracking reactions, which leads to a significant increase in light hydrocarbon products. On the other hand, when the SAR exceeds 200, acidity is too weak. This may result in significantly insufficient isomerization activity and strongly reduced cracking reactions.

In the catalyst of the present disclosure, the first catalyst and the second catalyst are in close spatial proximity, for example, within a distance of several micrometers, and are uniformly dispersed throughout the entire area of the catalyst. According to one preferred embodiment of the present invention, the first catalyst and the second catalyst are in close spatial proximity within a distance of 10 $\mu$m, and are uniformly dispersed throughout the entire area of the catalyst. This close and uniform dispersion of the first and second catalysts may increase the yield of the kerosene fraction as an FT reaction product.

In addition, using the catalyst of the present disclosure, the content ratio of n-paraffin:iso-paraffin in the kerosene fraction may be controlled in a range of 1:1 to 1:2. In the subsequent process of preparing jet fuel from the kerosene fraction, an isomerization process is required to satisfy jet fuel specifications such as a specific freezing point range. However, the use of the catalyst of the present disclosure allows the presence of a sufficient amount of iso-paraffin in the kerosene fraction, making it possible to omit the isomerization process.

Meanwhile, alumina and zeolite are uniformly dispersed within the composite carrier. However, it should be noted that this uniform dispersion does not mean that the contents of alumina and zeolite are the same. In the composite carrier, the content of zeolite may be equal to or greater than the content of alumina. According to one embodiment, a weight ratio of alumina to zeolite in the composite carrier may be 1:1 to 1:5. Specifically, the weight ratio may be 1:1 to 1:4, more specifically 1:2 to 1:4, and even more specifically 1:2 to 1:3. When the ratio is less than 1:1, a problem may occur in which a function of the zeolite in the catalyst is weakened. On the other hand, when the ratio exceeds 1:5, the amount of alumina hydrate is insufficient, thereby, problems may occur in which the adhesive strength between catalyst components decreases, and the strength of the catalyst, which is an extruded product after calcining, is reduced.

The composite carrier accounts for most of the weight of the catalyst. According to one embodiment, a content of the composite carrier in the catalyst may be at least 75 wt%. Specifically, the content may be 75 to 94 wt%, more specifically 75 to 92 wt%, more specifically 75 to 89 wt%, and even more specifically 75 to 87 wt%. When the content is less than 75 wt%, the content ratio of the metal component in the catalyst becomes too high, and problems may occur as the metal component is not sufficiently supported. Further, the particles may increase in size, which may reduce the efficiency of the catalyst. Accordingly, for an increased FT reaction efficiency and/or an improved catalyst durability, the content of the composite carrier may be 90 wt% or less.

The catalyst contains a metal including Co. A content of the metal in the catalyst may be at least 5 wt% in order to provide a high catalytic activity and/or an improved durability of the catalyst. Specifically, the content may be 5 to 20 wt%, more specifically 7 to 20 wt%, more specifically 8 to 20 wt%, and even more specifically 10 to 20 wt%. If the content of Co metal is less than 5 wt%, it may be difficult for the catalytic reaction to occur sufficiently under normal operating conditions, and the durability may be unfavorable. According to some embodiments, a particle size of the metal may be 1 $\mu$m or less. Herein, the particle size refers to the longest length of a particle. In addition, according to some embodiments, the metal may further include Fe.

The catalyst may further include a co-catalyst metal. According to one embodiment of the present disclosure, the co-catalyst metal may be supported on the composite carrier. The co-catalyst metal may contribute to controlling a reaction rate of Co, adjusting a chain length of the FT reaction product, and increasing the selectivity of olefin. For example, a content of the olefin in the naphtha fraction of the FT reaction product, which is obtained by using the catalyst of the present disclosure containing a co-catalyst metal, may be 50 wt% or more. In a subsequent process of preparing jet fuel from the naphtha fraction, olefin is required for oligomerization. Thus, increasing the content of the olefin in the naphtha fraction may increase jet fuel production efficiency without additional olefin supply.

The metal that may be used as the co-catalyst metal is not particularly limited as long as the metal is intended to achieve the above-mentioned purpose. For example, the co-catalyst metal may include Y, Ce, La, W, Mo, or a combination thereof.

According to one embodiment, a content of the co-catalyst metal in the catalyst may be at least 1 wt%. Specifically, the content may be 1 to 5 wt%, more specifically 1 to 4 wt%, and more specifically 1 to 3 wt%. If the content of the co-catalyst metal is below the range, it may not be sufficient to control the properties of the active metal, such as Co, in the catalyst. On the other hand, if the content of the co-catalyst metal exceeds the range, the problem of excessively reducing the catalytic activity of the metal may occur. According to some embodiments, a weight ratio of metal to co-catalyst metal may be 3:1 to 10:1.

When the catalyst of the present disclosure is in a deactivated state, the metal and co-catalyst metal may exist in the form of metal oxide(s). Activation of the catalyst may be performed by reducing the metal oxide using hydrogen. According to one embodiment, the catalyst may show a reduction peak at 600 °C or higher, as measured by hydrogen temperature-programmed reduction ($H_2$-TPR). Specifically, the catalyst may include a maximum reduction peak at 600 °C or higher, as measured by $H_2$-TPR. It is hypothesized that the presence of the reduction peak as described above is due to the strong interaction between the metal component and the composite carrier. Said strong interaction may control the selectivity of the FT reaction product by partially suppressing the activity of the metal component. As a result, it is possible to reduce the production of diesel+ fraction as a FT reaction product and also increase the production of iso-paraffin and olefin.

When used in an FT reaction, the catalyst of the present disclosure increases a conversion rate of syngas to liquid hydrocarbons and increases a yield of fractions with a boiling point equal to or below the kerosene boiling point compared to the diesel fraction. Among them, the catalyst of the present disclosure may increase a yield of the kerosene fraction, and it may increase olefin and/or iso-paraffin selectivity of the product. Among the FT reaction products produced in this way, the kerosene fraction may be used as a jet fuel product without an additional isomerization process. The naphtha fraction may be converted into a jet fuel product through a conversion reaction without additional olefin supply. Therefore, it is expected that the catalyst of the present disclosure may improve an overall yield of jet fuel by being used in conjunction with a jet fuel preparation process after the FT process.

Another aspect of the present disclosure provides a method of preparing a catalyst for an FT reaction. Unless otherwise stated, it should be noted that the detailed description of each component mentioned in the catalyst for an FT reaction described above may be equally applied to the common components described in the catalyst preparation method in the following.

The method of preparing a catalyst for an FT reaction includes preparing a composite carrier mixture including alumina hydrate and zeolite; preparing a precursor solution of a Co-containing metal; preparing a catalyst mixture by mixing the composite carrier mixture and the precursor solution; and calcining the catalyst mixture.

In the present disclosure, a metal precursor is not particularly limited as long as the metal precursor may provide a corresponding metal atom when preparing the catalyst mixture. Considering the addition of acid as described later, specifically, the metal precursor may be a salt of a metal and acid. According to one embodiment, the salt may specifically include nitrate, sulfate, chloride, acetate, or a combination thereof. In the case of a co-mulling method, an acidic precursor solution may promote the conversion of alumina hydrate to alumina during heat treatment. The use of salt of a metal and acid as precursors may be particularly advantageous for the preparation of acidic precursor solutions.

According to one embodiment, the precursor solution may be a mixed solution of the metal precursor and a co-catalyst metal precursor. The metal precursor and co-catalyst metal precursor in the precursor solution may be converted into a metal and co-catalyst metal, respectively, before mixing with the composite carrier mixture. According to one embodiment, the preparation of the catalyst mixture may further include adding an acid to the precursor solution. The addition of the acid may be performed before the precursor solution and the composite carrier mixture are mixed. The addition of the acid may dissociate the metal from the precursor solution and convert the metal into an ionic form.

As the acid, nitric acid, sulfuric acid, hydrochloric acid, acetic acid, or a combination thereof may be used. From the viewpoint of preventing poisoning due to residual salts, the acid may include nitric acid, acetic acid, or a combination thereof. In addition, from the viewpoint of strength of the catalyst paste, the acid may include nitric acid.

The catalyst mixture may be prepared by an impregnation or co-mulling method. In terms of streamlining the work steps and maintaining the strength of the extrudate, specifically, the catalyst mixture may be prepared by the co-mulling method. According to one embodiment, the preparation of the catalyst mixture may include preparing a paste by mixing the composite carrier mixture and the precursor solution; and preparing an extrudate by extruding the paste. In this case, calcining the catalyst mixture, subsequently implemented, is replaced by calcining the extrudate.

For the paste preparation, mixing may be performed by adding the precursor solution to the composite carrier mixture in small portions several times. The prepared paste may be made into an extrudate through a known extruder. The extrudate may be cut to an appropriate length as needed.

The catalyst mixture or extrudate undergoes a calcining treatment. According to one embodiment, the catalyst mixture or extrudate may be first calcined at a temperature of 80 °C to 200 °C for 1 to 10 hours (first calcination) and then calcined at a temperature of 400 °C to 700 °C for 1 to 10 hours (second calcination). Specifically, the first calcination may be performed at a temperature of 100 °C to 150 °C for 3 to 8 hours. When the temperature of the first calcination is below the specified range, a problem may occur in which moisture in the catalyst mixture or extrudate is not sufficiently removed. On the other hand, when the temperature of the primary calcination exceeds the specified range, the second calcination may not effectively remove moisture. In this case, a problem may occur in which the structure of the composite carrier becomes prone to collapse.

In addition, specifically, the second calcination may be performed at a temperature of 500 °C to 600 °C for 3 to 8 hours. When the temperature of the second calcination is below the range, problems such as insufficient removal of the remaining metal salt component in the catalyst mixture or extrudate, insufficient structural change of alumina hydrate to alumina, and insufficient removal of ammonia in the zeolite component may occur. On the other hand, when the temperature of the second calcination exceeds the range, problems such as structural change of alumina (e.g., gamma-alumina) and structural collapse of zeolite may occur.

The catalyst of the present disclosure may be prepared through the steps described above.

Hereinafter, examples of the present disclosure will be further described with reference to specific experimental examples. The Examples and the Comparative Example included in the experimental examples only illustrate the present disclosure and do not limit the scope of the appended patent claims. It is obvious to those skilled in the art that various changes and modifications to the embodiments are possible within the scope and spirit of the present disclosure.

Examples

1. Preparation of Catalysts

(1) Examples 1A-1F

16.1 g of MFI zeolite ($SiO_2/Al_2O_3$ = 30) and 7.9 g of pseudo-boehmite were mixed in a roller for 12 hours. A 1 M nitric acid ($HNO_3$) solution was prepared and added to the mixture of zeolite and pseudo-boehmite, and then the mixture was mixed to form a paste of a composite carrier. The paste was extruded using extrusion equipment, and an extruded product was cut to have a size of 2 mm in diameter x 10 mm in length. The extrudate was calcined at 120 °C for 5 hours and at 550 °C for 5 hours in an air atmosphere. Herein, the temperature increase rate was 2 K/min. The calcined extrudate was pulverized and meshed to prepare an MFI composite carrier as a particle with a diameter of 0.4 to 1.2 mm.

A cobalt nitrate compound and a nitrate compound of each of the respective co-catalyst metals were metered and added to 10 g of distilled water and then dissolved. The nitrate compounds were quantified so that the contents in the final catalyst amount to 10 wt% and 3 wt%, respectively. The quantification is based on the metal content in the nitrate compound. For example, if the nitrate compound has 25% Co by weight, this means that 4 g of Co-nitrate is used to yield 1 g of Co. Each of the metal mixture solution was added to 1.43 g of the MFI composite carrier prepared previously and mixed for 30 minutes. Each of the resulting mixtures was placed in an oven set at 80 °C, and the water was evaporated. The catalysts of Example 1 were prepared by calcining and meshing the dried samples. The calcining and mesh processing were the same as the calcining process of the MFI composite carrier extrudate described above. Table 1 below shows the components of the catalysts of Example 1.

[Table 1]

| Example | 1A | 1B | 1C | 1D | 1E | 1F |
|---|---|---|---|---|---|---|
| Metal | Co | Co | Co | Co | Co | Co |
| Co-catalyst Metal | - | Y | Mo | La | Ce | W |
| Zeolite | MFI | MFI | MFI | MFI | MFI | MFI |

(2) Examples 2A-2F

16.1 g of MFI zeolite ($SiO_2/Al_2O_3$ = 30), 14.7 g of MRE zeolite, or 14.8 g of hierarchical MRE zeolite were prepared. One type of zeolite selected from the zeolites and 7.9 g of pseudo-boehmite were mixed in a roller for 12 hours to prepare a composite carrier mixture.

A catalyst precursor mixed solution was prepared by dissolving a Co-nitrate compound and a nitrate compound of a co-catalyst metal in 1 M nitric acid ($HNO_3$) solution. A metal and co-catalyst metal were quantified in the same manner as Example 1. The catalyst precursor mixed solution was added to each of the composite carrier mixtures of the different zeolites and the pseudo-boehmite and mixed to prepare a paste. Each paste was extruded using extrusion equipment, and each extruded product was cut to have a size of 2 mm in diameter x 10 mm in length. The catalysts of Example 2 were prepared by calcining and meshing each extrudate. The calcining and meshing were performed under the same conditions as the calcining and meshing in Example 1. Table 2 shows the components of the catalysts of Example 2. Herein, h-MRE represents hierarchically porous MRE zeolite.

[Table 2]

| Example | 2A | 2B | 2C | 2D | 2E | 2F |
|---|---|---|---|---|---|---|
| Catalyst Metal | Co | Co | Co | Co | Co | Co |
| Co-catalyst Metal | - | Ce | - | Ce | - | Ce |
| Zeolite | MFI | MFI | MRE | MRE | h-MRE | h-MRE |

(3) Comparative Example

A Co precursor solution was prepared by dissolving 27.4 g of a Co-nitrate ($Co(NO_3)_2 \cdot 6H_2O$) compound in 100 g of distilled water at room temperature. After adding and mixing 50 g of $Al_2O_3$ extrudate to the Co precursor solution, the mixed solution was put into a rotary evaporator. A Co-supported extrudate (wet-extrudate) was prepared by volatilizing distilled water in the rotary evaporator (Rotary Bath temperature: 80 °C to 95 °C, pressure: 100 to 200 mmHg, and rpm: 40 to 100). The extrudate (wet-extrudate) was placed in an oven and dried at 80 °C for 12 hours. The catalyst of the Comparative Example was prepared by calcining and meshing the dried sample. The calcining and meshing were performed under the same conditions as the calcining and meshing used in the preparation of Example 1.

2. Confirmation of SEM Image of Prepared Catalysts and Dispersion of Components

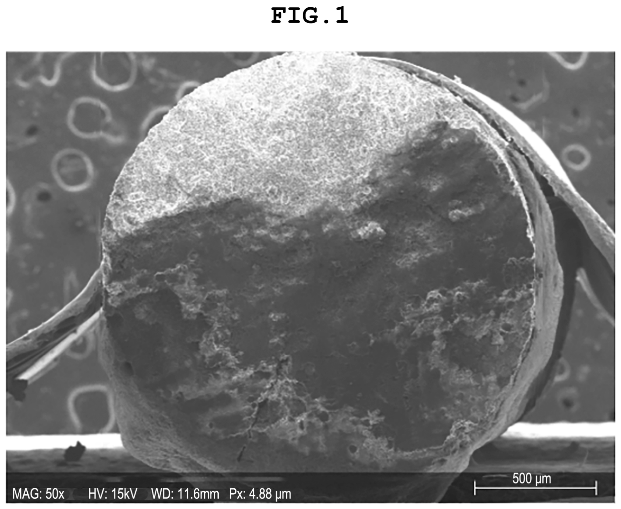

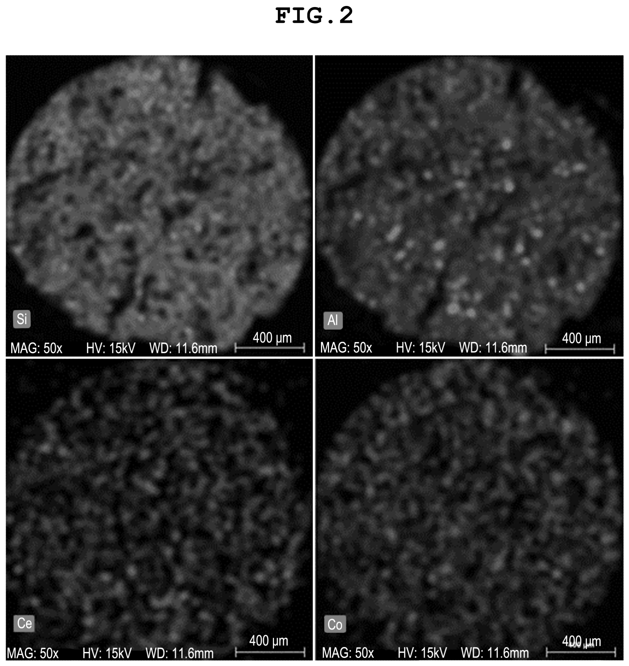

An SEM image of a cross-section of the catalyst extrudate of Example 1E is shown in Figure 1. A FEI *Apreo S2* SEM was used at a magnification of 50 x in SE (secondary electron) detection mode, an HV (accelerating voltage) of 15 kV, and a WD (working distance) of 11.6 mm. The dispersion of each element according to EDS analysis in the cross-section is shown in Figure 2. Herein, Al represents the dispersion of alumina and zeolite, and Si represents the dispersion of zeolite.

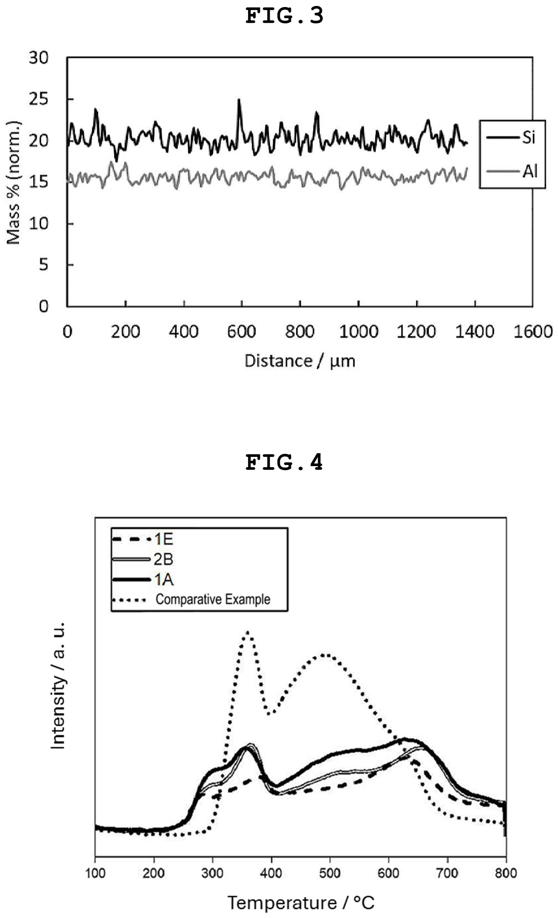

The line profile of the composition of aluminum and silicon on the reference line crossing the center of the cross-section of the extrudate of Example 1E was calculated based on results of energy dispersive spectrometry (EDS). The results are shown in Figure 3. As a result of calculating a UN according to Equation 1 for the two samples, the UN of the two samples was calculated as 2.42 and 3.24, respectively.

From Figures 1 to 3, it was confirmed that the composite carriers were uniformly dispersed within several micrometers in the catalysts of Examples, and the metal and co-catalyst metal are also uniformly supported on the composite carriers.

3. $H_2$-TPR analysis

A hydrogen temperature-programmed reduction ($H_2$-TPR) analysis was performed using Micromeritics' *Auto-*

*chem II* equipment. 100 mg of samples were used. Prior to the measurements, each sample was heated to 150 °C under a nitrogen ($N_2$) condition, and the condition was maintained for 2 hours, and then each sample was cooled to room temperature. Then, the signal (baseline) of a TCD detector was stabilized, and then measurements were performed in an atmosphere of 50 sccm (cc/min) flowing gas (6.82% hydrogen, balance helium He). The measurements were performed while increasing the temperature from room temperature to 800 °C at a ramp rate of 10 K/min.

The $H_2$-TPR results of Examples 1A, 1E, and 2B, and Comparative Example are shown in Figure 4. According to the data provided in Figure 4, it can be concluded that the catalysts of the inventive Examples reveal a maximum reduction peak at 600 °C or higher, which is significantly higher compared to that of the Comparative Example. The presence of a reduction peak at such a high temperature indicates strong interactions between the metal component of each of the catalysts of the Examples and the composite carriers.

4. Catalyst Performance Experiments

The catalysts of the Examples and the Comparative Example prepared previously were tested for their catalytic performance through the following procedures.

After mixing 1.43 g of each of the catalysts and 10 g of SiC, each of the mixtures was placed in a fixed bed reactor. As a pretreatment process, temperature was raised to 420 °C at a rate of 2 K/min while flowing hydrogen at a flow rate of 20 cc/min at an ambient pressure. Then, the catalyst metal of each of the catalysts was reduced and activated for 12 hours and cooled to room temperature. Reaction gas was changed from hydrogen to syngas ($H_2$ 60% + CO 30% + Ar 10%), and the reaction pressure was set to 20 bar. Then, reactions were started by raising the temperature to 250 °C at a temperature increase rate of 2 K/min while flowing the syngas at a flow rate of 50 cc/min. After 100 hours of reaction, cooling to room temperature was performed. Reaction liquid products in each case were recovered using a hot trap and cold trap.

The recovered liquid products in each case were subjected to 2D-GC analysis and separated into *normal*-paraffin, *iso*-paraffin, olefin, naphthene, and aromatic by carbon number and quantified. Specifically, an Agilent 7890A instrument equipped with two columns (DB-5, DB-Wax) and a modulator was used. In each case, the liquid products were mixed at 10% in a methylene chloride solvent and injected at 1 $\mu\ell$ (split ratio 100: 1). A GC oven was heated from 40 °C to 250 °C at a rate of 2 K/min.

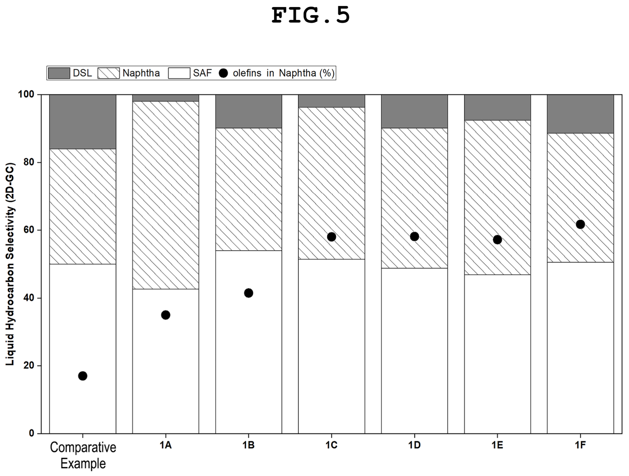

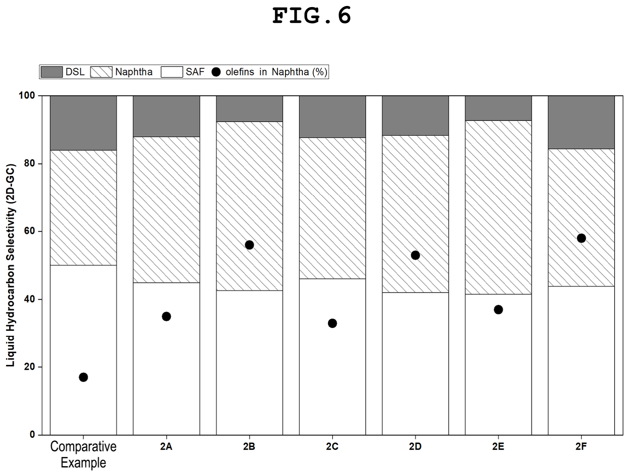

The results of the component analysis of each of the liquid products recovered from the catalyst performance experiments for each catalyst, which were prepared in Examples 1 to 2 and the Comparative Example, are shown in Figures 5 and 6. The fractions of naphtha, SAF, and diesel fractions in the liquid products for each catalyst and the olefin content in naphtha are shown. All the ratios and contents are based on weight.

The experimental results show that, compared to the Comparative Example, when using the catalysts of the Examples, the production of diesel fractions is reduced, whereas the olefin content in naphtha is increased. It is confirmed that in the case of the catalysts containing co-catalyst metal among the catalysts of the Examples, the olefin content in naphtha is 40 wt% or more, in particular.

In summary, the catalysts of the present disclosure induce strong interaction with metal by using composite carriers. Thereby, the catalysts may reduce the production of diesel fractions in the FT reaction product and increase the production of iso-paraffin and olefin. Thus, it is expected that the use of the catalysts of the present disclosure in the FT reaction process may offer a synergistic effect, which means that the use of the catalysts may be in conjunction with a subsequent process to convert the naphtha fractions into jet fuel products, thereby increasing the production of more sustainable jet fuel.

**Claims**

1.　A catalyst for a Fischer-Tropsch (FT) reaction, the catalyst comprising:

　　　a composite carrier comprising uniformly dispersed alumina and zeolite; and
　　　a metal supported on the composite carrier,
　　　wherein the metal comprises Co.

2.　The catalyst of claim 1, wherein the catalyst has a composition uniformity of 5.0 or less, as defined by UN in Equation 1:

(Equation 1)

$$UN = \frac{\sum\limits_{i=1}^{i=M} \left| C_{Al}(i) - C_{Al}(ave) \right|}{M \times C_{Al}(ave)} \times 100,$$

wherein, in Equation 1, UN represents the composition uniformity,

$C_{Al}$ represents a composition of alumina with a total content (wt%) of alumina and zeolite as a denominator and an alumina content (wt%) as a numerator,

$C_{Al}(ave)$ represents an average composition of alumina on the cross-section of a carrier across the center of the composite carrier,

$C_{Al}(i)$ represents a composition of alumina at the i-th numbered location when sequential numbers are assigned to locations spaced at regular intervals along a straight reference line crossing the center of the cross-section of the carrier, and

M represents a total number of locations, in which the composition of alumina is measured, on the reference line, and is a natural number from 20 to 500.

3. The catalyst of claim 1 or 2, wherein the zeolite has an MRE structure or an MFI structure.

4. The catalyst of any one of claims 1 to 3, wherein the zeolite comprises EU-2, ZSM-5, ZSM-48, or a combination thereof.

5. The catalyst of any one of claims 1 to 4, wherein a weight ratio of alumina to zeolite in the composite carrier is 1:1 to 1:5.

6. The catalyst of any one of claims 1 to 5, wherein a content of the composite carrier in the catalyst is at least 80 wt% based on the total mass of the catalyst.

7. The catalyst of any one of claims 1 to 6, wherein the metal further comprises Fe.

8. The catalyst of any one of claims 1 to 7, wherein a content of the metal in the catalyst is at least 5 wt% based on the total mass of the catalyst.

9. The catalyst of any one of claims 1 to 8, wherein the catalyst further comprises a co-catalyst metal.

10. The catalyst of claim 9, wherein the co-catalyst metal comprises Y, Ce, La, W, Mo, or a combination thereof.

11. The catalyst of claim 9 or 10, wherein a content of the co-catalyst metal in the catalyst is at least 1 wt% based on the total mass of the catalyst.

12. The catalyst of any one of claims 1 to 11, wherein the catalyst shows a reduction peak at 600 °C or higher, as measured by hydrogen temperature-programmed reduction ($H_2$-TPR).

13. A method of preparing a catalyst for a Fischer-Tropsch (FT) reaction, the method comprising:

preparing a composite carrier mixture comprising alumina hydrate and zeolite;
preparing a precursor solution of a Co-containing metal;
preparing a catalyst mixture by mixing the composite carrier mixture and the precursor solution; and
calcining the catalyst mixture.

14. The method of claim 13, wherein the preparation of the catalyst mixture further comprises adding an acid to the precursor solution.

15. The method of claim 13 or 14, wherein the preparation of the catalyst mixture comprises:

preparing a paste by mixing the composite carrier mixture and the precursor solution; and
preparing an extrudate by extruding the paste, and
the calcination of the catalyst mixture means calcining the extrudate.

# FIG.1

MAG: 50x    HV: 15kV    WD: 11.6mm    Px: 4.88 µm

500 µm

# FIG.2

## FIG.3

## FIG.4

FIG.5

# FIG.6

Europäisches
Patentamt

European
Patent Office

Office européen
des brevets

## EUROPEAN SEARCH REPORT

**Application Number**

EP 25 20 9384

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 061 525 B1 (KOREA ENERGY RESEARCH INST [KR]; KOREA INST ENERGY RES [KR]) 17 June 2020 (2020-06-17) | 1-6,8,12 | INV. B01J21/04 B01J23/75 |
| Y | * abstract; examples 1,6 * | 7 | B01J29/40 B01J29/70 |
| | ----- | | B01J37/00 |
| X | KANG SUK-HWAN ET AL: "Catalytic Performance for Hydrocarbon Production from Syngas on the Promoted Co-Based Hybrid Catalysts; Influence of Pt Contents", BULLETIN OF CHEMICAL REACTION ENGINEERING & CATALYSIS, vol. 12, no. 3, 1 December 2017 (2017-12-01), pages 452-459, XP093401124, ISSN: 1978-2993, DOI: 10.9767/bcrec.12.3.592.452-459 | 1-6,8,9, 11,12 | B01J37/04 B01J37/08 B01J35/30 C10G2/00 |
| Y | materials and method; * abstract; figure 2; table 1 * | 7 | |
| | ----- | | |
| X | RYU JAE-HONG ET AL: "Fischer-Tropsch synthesis on Co-Al2O3-(promoter)/ZSM5 hybrid catalysts for the production of gasoline range hydrocarbons", KOREAN JOURNAL OF CHEMICAL ENGINEERING SUBSCRIPTION, NEW YORK, vol. 32, no. 10, 23 June 2015 (2015-06-23) , pages 1993-1998, XP035552826, ISSN: 0256-1115, DOI: 10.1007/S11814-015-0046-6 [retrieved on 2015-06-23] | 1-6,8-12 | **TECHNICAL FIELDS SEARCHED (IPC)** B01J C10G |
| Y | experimental; * abstract; figure 3; table 1 * | 7 | |
| | ----- | | |
| | -/-- | | |

The present search report has been drawn up for all claims

| Place of search | Date of completion of the search | Examiner |
|---|---|---|
| Munich | 28 May 2026 | Fischbach, Malaika |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Thongratkeaw Sutarat: "COMPARISON OF MONO METALLIC AND BIMETALLICS Co, Ni CATALYSTS SUPPORTEDON Al2O3/ZSM-5 FOR CO2 REFORMING OF METHANE", , 1 January 2015 (2015-01-01), XP093401456, Retrieved from the Internet: URL:https://digital.car.chula.ac.th/chulaetd/70102/ | 1-6,8, 12,13 | |
| Y | * 3.1 Catalyst preparation * ----- | 7 | |
| X | KR 102 284 848 B1 (KOREA RES INST CHEMICAL TECH [KR]) 2 August 2021 (2021-08-02) | 1-6,8, 12-15 | |
| Y | * abstract; claim 1; example 1 * ----- | 7 | |
| Y | JIMMY JIMMY ET AL: "Fischer-tropsch synthesis: effect of temperature and iron-cobalt ratio in Fe-Co/meso-HZSM-5 catalyst on liquid product distribution", EUREKA: PHYSICS AND ENGINEERING, no. 2, 29 March 2024 (2024-03-29), pages 13-20, XP093401538, ISSN: 2461-4254, DOI: 10.21303/2461-4262.2024.003094 * the whole document * ----- | 7 | TECHNICAL FIELDS SEARCHED (IPC) |

The present search report has been drawn up for all claims

| Place of search | Date of completion of the search | Examiner |
|---|---|---|
| Munich | 28 May 2026 | Fischbach, Malaika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9384

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2026

| Patent document cited in search report | | Publication date | Patent family member(s) | | Publication date |
|---|---|---|---|---|---|
| EP 3061525 | B1 | 17-06-2020 | EP | 3061525 A1 | 31-08-2016 |
| | | | KR | 101373823 B1 | 11-03-2014 |
| | | | US | 2016303555 A1 | 20-10-2016 |
| | | | WO | 2015060472 A1 | 30-04-2015 |
| KR 102284848 | B1 | 02-08-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180125087 A